# EUROPÄISCHE PATENTANMELDUNG

(11) **EP 0 635 354 A1**
(43) Veröffentlichungstag der Anmeldung: **25.01.1995**
(21) Anmeldenummer: 94810396.5
(22) Anmeldetag: 05.07.1994
(51) Int. Cl.: B29C 65/34, F16L 47/02, B29C 45/14, B29K 105/08

(54) **Elektro-Schweissmuffe**

(30) Priorität: 23.07.1993 CH 2244/93
(71) Anmelder: Streng Plastic AG, CH-8155 Niederhasli (CH)
(72) Erfinder: Thalmann, Alfred, CH-8248 Uhwiesen (CH)
(74) Vertreter: Frei, Alexandra Sarah

(57) **Zusammenfassung**

Die Erfindung betrifft eine Elektro-Schweissmuffe (5) zum Verschweissen rohrförmiger Schweissenden (R1,R2) aus thermoplastischen oder schweissbaren Kunststoffen, welche mit einer Heizdrahtwicklung (2) und mit Kontakten (3,3') zum Zuführen elektrischen Stroms versehen ist, wobei diese Elektro-Schweissmuffe (5) eine Schweisshülse (5.1) zur Aufnahme der Heizdrahtwicklung (2) und ein Abschlussmittel (5.2) aufweist, dass diese beiden je formschlüssige Verankerungsstellen zur gleichzeitigen radial- und axialschlüssigen Verbindung besitzen und dass die Verankerungsstellen in Form ineinandergreifender Aushöhlungen (6,6') und Auswölbungen (7,7') und/oder als die Schweisshülse (5.1) übergreifendes Abschlussmittel (5.2) gestaltet sind.

## Beschreibung

Die Erfindung bezieht sich auf Verbindungen oder Formteile von rohrförmigen Schweissenden und betrifft eine Elektro-Schweissmuffe für Druckrohre aus thermoplastischen Kunststoffen cemäss den Ansprüchen.

Bei Elektro-Schweissmuffen zur Verbindung rohrförmiger Schweissenden aus thermoplastischen Kunststoffen ist es Stand der Technik, dass der Muffenkörper und die zu verbindenden rohrförmigen Schweissenden einheitlich aus demselben Material, beispielsweise aus Polyolefinen wie Polyäthylen hergestellt werden. Die Wanddicke des Muffenkörpers wird materialspezifisch so gewählt, dass die mechanische Festigkeit sowohl für radiale als auch für axiale Belastungen mindestens der mechanischen Festigkeit des zu verschweissenden rohrförmigen Teils entspricht. Solche Elektro-Schweissmuffen sind beispielsweise aus den Patentschriften DE-AS 28 23 455 und EP 0 222 287 bekannt.

Das Verfahren der Heizwendelschweissung oder Elektro-Muffenschweissung wird heute vorwiegend in Polyäthylen-Druckrohrnetzen für die Gas- und Wasserversorgung angewendet. Im Dimensionsbereich kleinerer und mittlerer Rohrdurchmesser von 20 mm bis 225 mm hat sich das vorerwähnte Konstruktionsprinzip der Werkstoffeinheitlichkeit ausgezeichnet bewährt.

Polyäthylen findet nun ein zunehmendes Interesse für den Einsatz mit grösseren Leitungsquerschnitten. Als Verbindungstechnik kommen hierbei die Heizelement-Stumpfschweissung und die Elektro-Muffenschweissung in Betracht. Für die Verbindung grosser Rohre und Rohrbauteile sind dementsprechend dimensionierte Elektro-Schweissmuffen daher mehr und mehr gefragt.

Solche Aufskalierungen der Rohrdimensionen sind allerdings mit Nachteilen verbunden. Nach dem Prinzip der Werkstoffeinheitlichkeit wachsen mit steigendem Rohrdurchmesser auch die Wanddicken der Elektro-Schweissmuffen. Die Wanddicken werkstoffeinheitlicher Elektro-Schweissmuffen werden, um den Betriebsdruck auszuhalten, mindestens so dick wie die Wanddicken der zu verschweissenden Rohre konzipiert. Nun weisen schweissbare Kunststoffrohre für Druckrohrleitungen grosser lichter Weite, speziell solche aus Polyäthylen, relativ grosse Wanddicken auf, was zur Verwendung dementsprechend dickwandiger Elektro-Schweissmuffen führt. Als Folge hiervon werden deren Gewicht und Volumen so gross, dass die Handhabung, Transport, Lagerung, etc. erschwert bzw. verteuert werden. Auch die Fertigung solcher grosser, dickwandiger und schwerer Muffenkörper, beispielsweise im Spritzgussverfahren, ist teuer, denn sie führt zu unwirtschaftlich langen Maschinen-Zykluszeiten, zu hohen Kosten für entsprechend grosse und leistungsstarke Spritzgussautomaten und benötigt schliesslich einen grossen Materialbedarf.

Ausser dieser ökonomischen und produktionstechnischen Aspekte gilt es auch, schweisstechnische Belange zu berücksichtigen. Elektro-Schweissmuffen für grosse Rohre mit grossen Wanddicken müssen nämlich mit entsprechend gross dimensionierten Schweissflächen ausgelegt werden. Diese erfordern zum Aufschmelzen grosser Thermoplastmengen auch mehr elektrische Energie, welche wiederum über die Verlängerung der Schweisszeit in die Fügezone eingebracht wird. Lange Schweisszeiten bedeuten, dass auch ein grösserer Teil des Muffenkörpers aufgeheizt wird, was ja eine Vergrösserung aufgeheizter Volumenanteile zur Folge hat. Dieser Effekt wird schweisstechnisch dazu benutzt, um in der Schmelzzone einen zur Stoffverbindung notwendigen Fügedruck aufzubauen. Er kommt aber nur zustande, wenn der Muffenkörper über einen genügend grossen Wärmegradienten verfügt, und mechanisch tragfähig und formstabil bleibt. Solche, den Fügedruck ausgleichenden Bereiche können, getrennt durch eine grosse Wanddicke, die Aussenbereiche des Muffenkörpers sein. Muffenkörper für grosse Rohrdurchmesser werden also aus rein schweisstechnischen Aspekten mit überdimensionierten Wanddicken versehen.

Als Lösung dieser Nachteile werden in den Patentschriften DE 39 32 807 und EP 0 222 287 Elektro-Schweissmuffen beschrieben, die über extern angebrachte Armierungen verfügen. Diese Armierungen zeichnen sich dadurch aus, dass der Muffenkörper in radialer Richtung eine Versteifung erfährt, sodass die Wanddicke des Muffenkörpers zur Optimierung der Schweissparameter nicht zusätzlich über die für den Betriebsdruck notwendige Dicke hinausgehend verdickt und versteift werden muss. Für axiale Belastungen, beispielsweise verursacht durch äussere Einflüsse wie Geländeverschiebungen, Verletzungen durch Werkzeuge usw., bleiben diese Armierungen aber weitgehend wirkungslos. Die minimal zulässige Muffenwanddicke wird demnach weiterhin durch das Mass der Wanddicke des zu verschweissenden Rohrs bestimmt, um so die Einheitlichkeit von radialer und axialer Tragfähigkeit des Rohrstrangs und auch die der Verbindungsstellen des gesamten Rohrsystems zu gewährleisten.

Wünschenswert wäre eine Elektro-Schweissmuffe die mit möglichst geringem Materialaufwand einerseits optimale Bedingungen für den Schweissvorgang, wie die Erzeugung eines notwendigen Schweissdrucks zur werkstoffeinheitlichen Verschweissungen und andererseits optimale mechanische Festigkeitswerte für den späteren Gebrauchseinsatz gewährleistet.

Es ist nun Aufgabe der Erfindung eine Elektro-Schweissmuffe und ein Verfahren zur Herstellung derselben aufzuzeigen, die mechanisch stabile Verbindungen zwischen Elektro-Schweissmuffe und rohrförmigen Schweissenden ermöglicht, wodurch auftretende radiale und axiale Kräfte aufgefangen werden.

Diese Aufgabe wird durch die in den Patentansprüchen definierte Erfindung gelöst.

Die vorliegende Erfindung betrifft ein konstruktives Konzept und ein rationelles Herstellungsverfahren für eine Elektro-Schweissmuffe zur schweisstechnisch und festigkeitsmässig einwandfreien Verbindung von grossen Rohren mit entsprechend grossen Wanddicken aus thermoplastischem Kunststoff. Die Idee der Erfindung liegt darin, zwischen Aspekten der materialgerechten Langzeitabdichtung und der mechanischen Festigkeit von Rohrverbindungen konsequent zu unterscheiden.

Die beste materialgerechte Langzeitabdichtung eines Rohrstosses wird durch stoffeinheitliche Verschweissung erreicht, wie dies im Kunststoffrohrleitungsbau mit Hilfe von Elektro-Schweissmuffen für kleine bis mittlere Rohrgrössen bekannt ist. Für die reine Mediumdichtheit reicht eine relativ dünnwandige Hülse aus, die aus dem verschweissbaren thermoplastischen Rohrwerkstoff besteht und die mit einer Heizdrahtwicklung ausgerüstet ist.

Die mechanische Festigkeit im späteren Gebrauchseinsatz solcher mediumdichten Anordnungen beinhaltet das Auffangen der am Rohrstrang auftretenden radialen und axialen Kräfte. Solche Kräfte bewirken einen Kraftfluss über die Schweissverbindungen der rohrförmigen Schweissenden auf die ElektroSchweissmuffe. Erfindungsgemäss werden diese Kräfte durch ein, der Schweisshülse überlagertes, mit dieser quer- und längskraftschlüssig verbundenes Abschlussmittel oder Verstärkung aufgefangen. Dieses Abschlussmittel kommt mit dem in der Rohrleitung vorhandenen Medium nicht in Berührung. Verglichen mit dem Rohrwerkstoff, unterliegt sie also ganz anders gearteten Auswahlkriterien, wobei optimale mechanische Festigkeitswerte im Vordergrund stehen.

Anhand der folgenden Figuren 1 bis 5 wird die Erfindung im Detail beschrieben.
- Fig. 1: zeigt den Stand der Technik einer werkstoffeinheitlichen Rohrverbindung im Längsschnitt.
- Fig. 2: zeigt eine erste Ausführungsform einer erfindungsgemässen Rohrverbindung im Längsschnitt.
- Fig. 3a-d: zeigen eine erste Verfahrensvariante und Verfahrensschritte zur Herstellung einer ersten Ausführungsform einer erfindungsgemässen Elektro-Schweissmuffe mit Schweisshülse und Abschlussmittel gemäss Figur 2; die einzelnen Figuren sind Längsschnitte durch Teile von Vorfabrikaten; es zeigt:

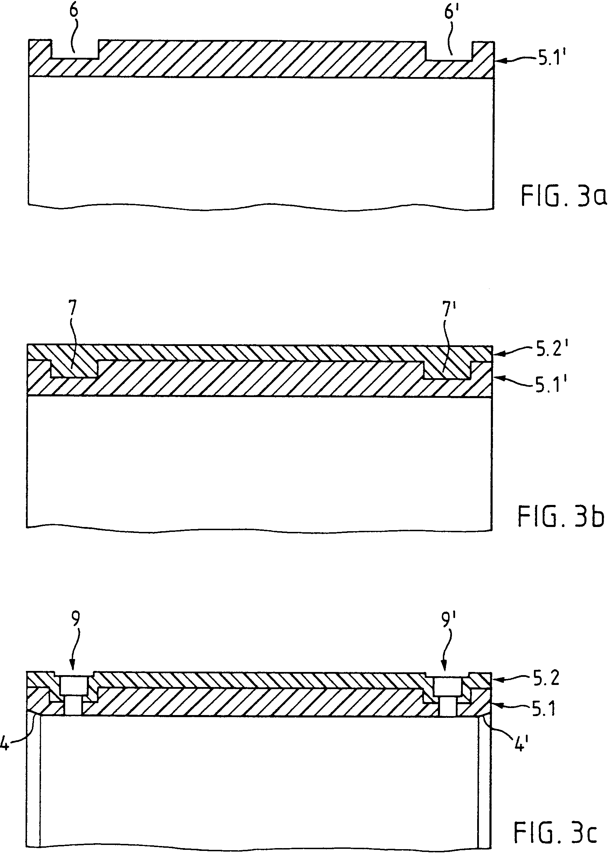

- Fig. 3a: die Formgebung der Halbzeug-Schweisshülse, hergestellt durch mechanische Bearbeitung eines Rohrabschnitts oder hergestellt als Spritzgussteil.
- Fig. 3b: die Formgebung des Halbzeug-Muffenkörpers mit auf der Halbzeug-Schweisshülse aufgebautem Halbzeug-Abschlussmittel.
- Fig. 3c: die Formgebung des Halbzeug-Muffenkörpers mit für das Einbringen der Heizdrahtwicklung in die Halbzeug-Schweisshülse massgenau gearbeiteten Muffenbohrung und radial gebohrten Positionsstellen für die Montage der Komponenten zur späteren Kontaktierung der Heizdrahtwicklung.
- Fig. 3d: die fertige erfindungsgemässe Elektro-Schweissmuffe für grosse Rohre.

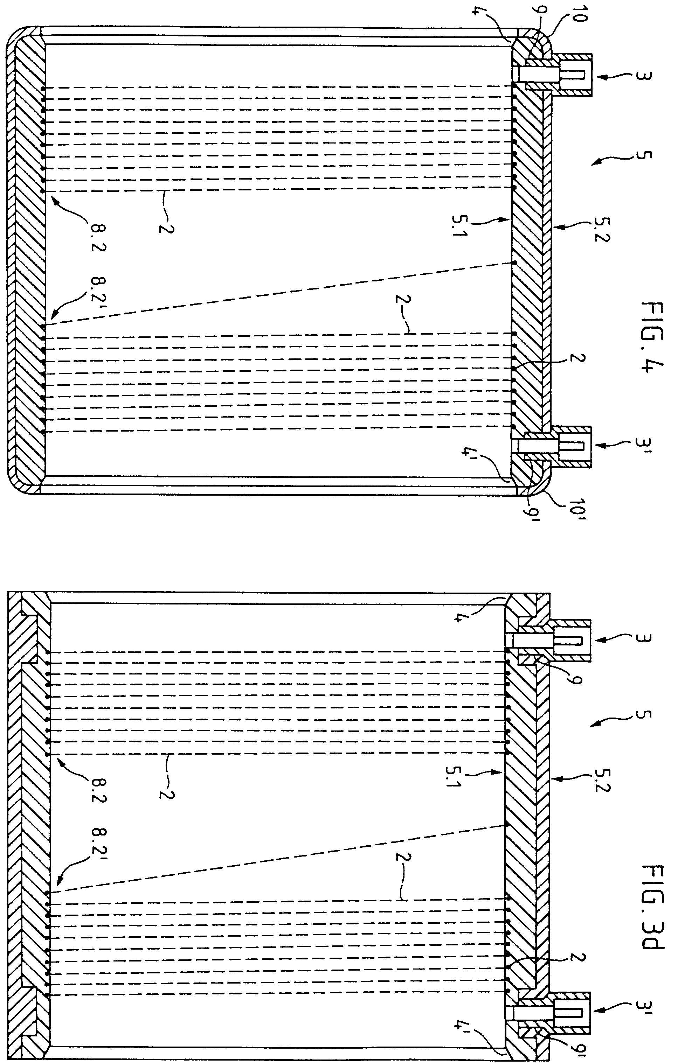

- Fig. 4: zeigt im Längsschnitt Teile einer zweiten Ausführungsform einer erfindungsgemässen Elektro-Schweissmuffe mit einem Abschlussmittel in Form eines metallischen oder duroplastischen Käfigs, die in einer zweiten Verfahrensvariante hergestellt werden kann.

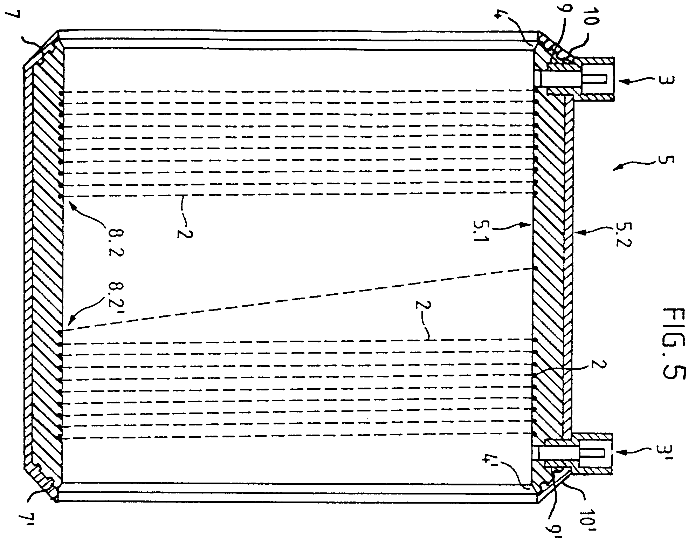

- Fig. 5: zeigt im Längsschnitt Teile einer dritten Ausführungsform einer erfindungsgemässen Elektro-Schweissmuffe mit einem Abschlussmittel in Form eines metallischen oder duroplastischen Käfigs.

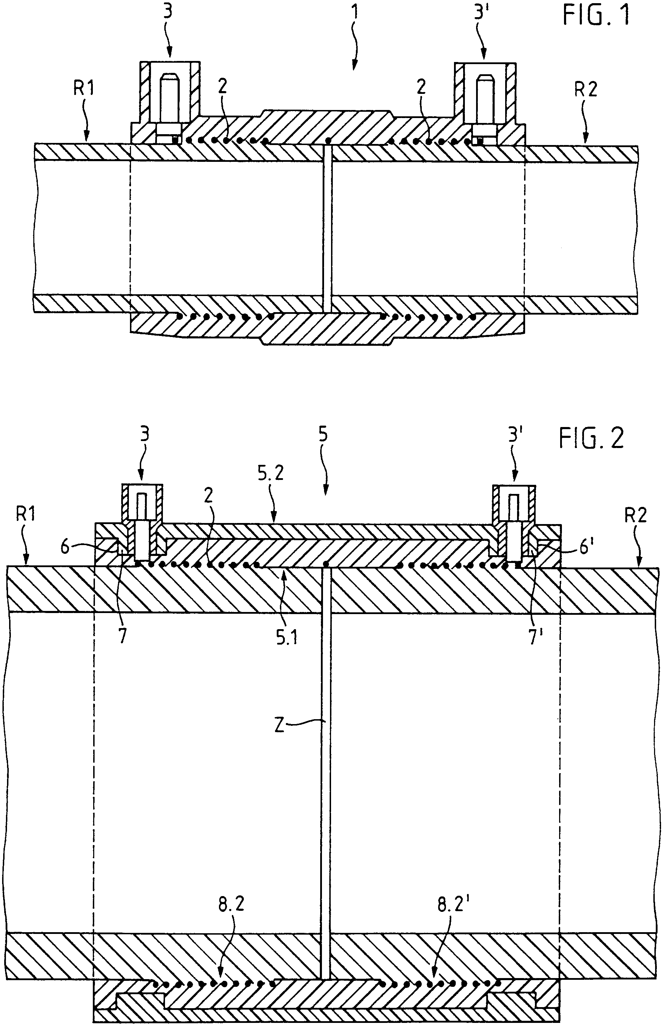

**Figur 1** zeigt den Stand der Technik einer werkstoffeinheitlichen Rohrverbindung im Längsschnitt. Die rohrförmigen Schweissenden R1 und R2 sowie die Elektro-Schweissmuffe 1 sind aus dem gleichen thermoplastischen Material beispielsweise einem Polyolefin wie Polyäthylen gefertigt. Die ElektroSchweissmuffe 1 ist an der Aussenseite der zu verbindenden Rohre R1 und R2 angebracht. Zum Schweissen wird einer Heizdrahtwicklung 2 über die Kontakte 3, 3' ein bestimmter Schweissstrom zugeführt. Beim Schweissen wird diese, beispielweise auf der Innenfläche der Elektro-Schweissmuffe spiralförmig verlaufende Heizdrahtwicklung 2 heiss. Hieraufhin wird der die Heizdrahtwicklung 2 umgebende thermoplastische Kunststoff des inneren Bereichs der Elektro-Schweissmuffe und des äusseren Bereichs der Rohrenden R1, R2 weich, die Rohrenden R1, R2 werden mit der Elektro-Schweissmuffe verschweisst. Der äussere Bereich der Elektro-Schweissmuffe bleibt hingegen hart und sorgt für die notwendige mechanische Stabilität.

Die Wanddicke dieser Elektro-Schweissmuffe zur werkstoffeinheitlichen Verschweissung muss so gewählt werden, dass während der Zeit der Stromzufuhr, d.h. dass auch bei langer Schweisszeit eine genügend bemessene äussere Mantelschicht kalt und mechanisch genügend tragfähig bleibt, um die im Heizbereich entstehenden, thermischen Volumenvergrösserungen von Muffenkörper und Schweissenden möglichst wirksam radial gegeneinander zu zwingen. Auf diese Weise werden die im Kaltzustand mit Spiel montierten Fügeflächen aneinander geschwellt, sodass ein hinreichender Füge- oder Schmelzdruck erzeugt wird. Mit zunehmendem Rohrduchmesser wachsen solche durch Wärmeausdehnung zu überbrückende Montagespiele an, die Angleichzeiten bis zur schweissdichten Berührung der Fügeflächen werden also länger, die wegen der grösseren Schweissflächen benötigte Schweissenergie steigt überproportional an, wodurch die Wärmeeindringung in den Muffenkörper bedeutend wird. Dies führt zu einer markanten Abnahme der radialen Steifigkeit oder Ringsteifigkeit, wodurch die Fügeverhältnisse erheblich gestört werden können und eine dichte Verschweissung gefährdet wird. Entstehen nun, verursacht durch umfangsmässig unterschiedliche Spielverteilungen im Fügebereich, Teilbereiche mit ungenügendem Schweissdruck, so sind Schweissfehler unvermeidlich. Durch Vergrösserung der Wanddicke des Muffenkörpers lässt sich dem natürlich Abhilfe schaffen. Diese schweisstechnisch begründete Massnahme ist aber für die Mediendichtigkeit selbst und die Druckfestigkeit der Schweissverbindung überflüssig und führt, wie oben beschrieben, zu Nachteilen bei der Herstellung und Montage.

Die Elektro-Schweissmuffe 1 der bekannten Ausführungsform gemäss Figur 1 ist also nur zur Dissipation der Schweissenergie mit massiven Wanddicken gearbeitet. Sie bildet somit eine ausreichend grosse thermische Senke, um beim Schweissen auf ihrer Aussenseite nicht weich zu werden und hält aufgrund der grossen Masse auch den notwendigen Anpressdruck aus, d.h. sie verformt sich nicht oder nur minimal unter dem Anpressdruck.

**Figur 2** zeigt eine erfindungsgemässe Rohrverbindung im Längsschnitt. Diese erste Ausführungsform einer erfindungsgemässen Elektro-Schweissmuffe 5 ist auf der Aussenseite zweier zu verbindender rohrförmiger Schweissenden R1 und R2 angebracht. Sie verfügt über eine Heizdrahtwicklung 2 mit Kontakten 3, 3', über die ein bestimmter Schweissstrom zugeführt wird und so die rohrförmigen Schweissenden R1, R2 verschweisst. Anders als in der bekannten Ausführungsform gemäss Figur 1, bildet die Elektro-Schweissmuffe 5 einen aus verschiedenen Materialien bestehenden Compound-Muffenkörper. Die Innenseite der Elektro-Schweissmuffe 5 besteht aus einer Schweisshülse 5.1, die vorteilhafterweise aus demselben Werkstoff wie die rohrförmigen Schweissenden R1 und R2, beispielsweise aus Polyolefinen wie Polyäthylen gefertigt ist so deren optimale materialgerechte stoffeinheitliche Verschweissung garantiert. Die Aussenseite der Elektro-Schweissmuffe 5 hingegen ist ein Abschlussmittel 5.2 und besteht aus einem anderen, bei den Schweisstemperaturen nicht erweichendem und nicht schmelzendem Werkstoff. Für diese Aufgabe bieten sich viele speziell konzipierte Materialien an. Sie sollen bestimmten mechanischen Festigkeitskriterien genügen, wie Härte, Steifigkeit, thermische Ausdehnung, Korrosionsbeständigkeit, usw. Ideale Eigenschaften diesbezüglich sind beispielsweise mit Metallen und faserverstärkten Duroplasten zu erreichen. Dem Fachmann stehen bei Kenntnis dieser Erfindung eine Vielzahl von Ausführungsformen in den verschiedensten Materialien zur Verfügung.

Diese klare Trennung zwischen Aspekten der materialgerechten Langzeitabdichtung und der mechanischen Festigkeit von Rohrverbindungen gestatten eine Optimierung jeder dieser Funktionen. Mit minimalem Materialeinsatz von, für die jeweilige Teilfunktion optimal geeigneten Werkstoffen, wird eine langzeittaugliche werkstoffeinheitliche Elektro-Schweissmuffenverbindung erreicht, welche speziell bei grossen Rohrdurchmessern eine, verglichen mit anderen werkstoffeinheitlichen Konstruktionen, bedeutend geringere Wanddicke des Muffenkörpers benötigt. Die mechanische Verstärkung der Elektro-Schweisshülse ist ein Abschlussmittel mit Vorrichtungen zum Auffangen radialer und axialer Kräfte. Sie liegt ausserhalb der Schweisshülse und der Schweisszonen, ist aus beim Schweissvorgang nicht schmelzendem und nicht erweichendem Material und stützt diese nicht nur beim Schweissvorgang gegen radiale Kräfte, sondern auch gegen axiale Kräfte ab. Das Abschlussmittel fängt den Kraftfluss äusserer Kräfte über die Schweissverbindungen der rohrförmigen Schweissenden auf die Elektro-Schweissmuffe ab. Diese vorteilhafterweise aneinandergeformte dünnwandige, innenliegende Schweisshülse und das aussenliegende Abschlussmittel bilden eine Elektro-Schweissmuffe von leichter und kleiner Bauweise.

Das Abschlussmittel 5.2 fängt also radiale und axiale Kräfte auf. Radial auftretende Kräfte werden durch die geringe thermische Ausdehnung und das Nichtschmelzen und Nichterweichen der verwendeten Duroplaste beim Schweissvorgang kompensiert, sodass äussere Erweiterung in Form einer radialen Expansion nicht auftritt. Axial auftretende Kräfte, verursacht beispielsweise durch Geländeverschiebungen oder unterschiedliche thermische Ausdehnungen zwischen der Rohrleitung und des diese umgebenden Erdreichs zu verschiedenen Jahreszeiten, werden durch vorzugsweise quer zur Längsachse der Elektro-Schweissmuffe 5 in der Schweisshülse 5.1 und dem Abschlussmittel 5.2 angebrachte Verankerungsstellen in Form von passend zueinander gearbeiteter Aushöhlungen 6, 6' und Auswölbungen 7, 7' kompensiert. Diese Kräfte können Normal- oder Scherkräfte sein. Die Aushöhlungen 6, 6' können geschlossen oder teilweise geschlossen auf den äusseren Oberflächen der Schweisshülse 5.1 umlaufende Nuten sein. Die Auswölbungen 7, 7' können dementsprechend passend gearbeitete Stege auf den inneren Oberflächen des Abschlussmittels 5.2 sein. Es ist auch möglich, passend zueinander gearbeitete Aushöhlungen 6, 6' auf inneren Oberflächen des Abschlussmittels 5.2 und Auswölbungen 7, 7' auf äusseren Oberflächen der Schweisshülse 5.1 anzubringen. Gemäss Figur 2 sind, in Längsachse der rohrförmigen Schweissenden R1, R2 und der Elektro-Schweissmuffe 5 gesehen, jeweils zwei Paare von zueinander passend gearbeiteten Aushöhlungen 6, 6' und Auswölbungen 7, 7' in konstantem Abstand von der Schweisszone nahe der äusseren Begrenzung der Elektro-Schweissmuffe 5 angebracht.

Der Zentralbereich Z der zu verschweissenden rohrförmigen Schweissenden R1, R2 ist der Bereich, in dem diese in Kontakt miteinander kommen können, wenn sie verschweissfertig in der Elektro-Schweissmuffe 5 stecken. In Figur 2 sieht man, dass die rohrförmigen Schweissenden R1, R2 dabei nicht gegeneinander aufliegen, sondern montagebedingt durch einen Spalt getrennt sind. Die Heizdrahtwicklung 2 weist nun zwei Bereiche von Schweisszonen 8.2, 8.2' auf, die vom Zentralbereich Z der zu verbindenden rohrförmigen Schweissenden R1, R2 getrennt sind und die symmetrisch links und rechts vom Zentralbereich Z liegen. Die Heizdrahtwicklung 2 erzeugt somit ein inhomogenes Wärmefeld auf der Innenfläche der Schweisshülse 5.1 und den Aussenflächen der zu verschweissenden rohrförmigen Schweissenden R1, R2, derart, das diese im Bereich der Schweisszonen 8.2, 8.2' in Schmelzeinseln unter Schweissdruck in einer teigigen Schmelze verschweisst werden.

Die **Figuren 3a** bis **3d** zeigen eine erste Verfahrensvariante und Verfahrensschritte zur Herstellung einer erfindungsgemässen Elektro-Schweissmuffe 5 im Längsschnitt durch Teile von Vorfabrikaten derselben. Es handelt sich um die gleiche erste Ausführungsform, welche gemäss Figur 2 beschrieben ist.

**Figur 3a** zeigt die Formgebung einer Halbzeug-Schweisshülse 5.1' einer Elektro-Schweissmuffe 5. In dieser Verfahrensvariante wird die Halbzeug- Schweisshülse 5.1' durch mechanische Bearbeitung eines Rohrabschnittes oder als Spritzgussteil aus thermoplastischen Kunststoffen wie Polyolefinen, beispielsweise Polyäthylen hergestellt. Diese Halbzeug-Schweisshülse 5.1' weist eine geometrische Vorzugsachse, beispielsweise entlang der Längsachse zweier zu verbindender rohrförmiger Schweissenden auf, und wird daher so hergestellt, dass sie sich über den Aussendurchmesser rohrförmiger Schweissenden stülpen lässt. Vorteilhafterweise umhüllt die Halbzeug-Schweisshülse 5.1' mit dieser flächigen Ausdehnung die Schweisszone der zu verschweissenden rohrförmigen Schweissenden geschlossen ringförmig und wird somit als dünne Hülle von gleichmässiger Dicke hergestellt, sodass der thermoplastische Kunststoff entsprechend der Heizleistung der gleichmässig eingelegten Heizdrahtwicklung gleichmässig verschmilzt. Natürlich sind andere Ausführungsformen, mit ungleichmässigen Dicken der Halbzeug-Schweisshülle 5.1' und von in unregelmässigen Abständen eingelegten Heizdrahtwicklungen 2 möglich. Für Details hierzu siehe die Beschreibung gemäss Figur 3d. Bei Kenntnis der vorliegenden Erfindung bieten sich dem Fachmann diesbezüglich vielfältige Gestaltungsmöglichkeiten.

Auf der Aussenseite der Halbzeug-Schweisshülse 5.1' werden Aushöhlungen 6, 6' angebracht, sodass später passend gearbeitete Auswölbungen 7, 7' eines Abschlussmittels 5.2 mit diesen Aushöhlungen 6, 6' verbunden werden können und somit Verankerungsstellen gebildet werden. Die Aushöhlungen 6, 6' können geschlossen oder teilweise geschlossen auf den äusseren Oberflächen der Halbzeug-Schweisshülse 5.1' verlaufen. Die Form der Aushöhlungen 6, 6' ist frei varierbar. So können sie als gerade längliche Nuten, als kreisförmige oder ovale Sacklöcher oder auch als komplizierte dreidimensionale Gebilde, ähnlich dem Profil von Autoreifen, wie regelmässig oder unregelmässig gerippte Kerben (siehe Figur 5) etc. ausgebildet sein. Auch die Tiefe der Aushöhlungen 6, 6' ist frei wählbar. Die Aushöhlungen 6, 6' können mit geeigneten Werkzeugen vollautomatisch, beispielsweise durch Einstechen von Nuten, hergestellt werden.

In **Figur 3b** ist zu sehen, wie ein Halbzeug-Abschlussmittel 5.2' auf eine Halbzeug-Schweisshülse 5.1' einer Elektro-Schweissmuffe 5 montiert wird. Dieses Halbzeug-Abschlussmittel 5.2' besteht beispielsweise aus faserverstärkten Duroplasten. Diese Duroplaste können als harzgetränkte Fäden oder Schnüre in die Aushöhlungen 6, 6' der Halbzeug-Schweisshülse 5.1' gewickelt werden, wodurch die Auswölbungen 7, 7' entstehen. Der übrige Abschlussmittelkörper kann entweder auch als harzgetränkte Fäden oder Schnüre auf die Halbzeug-Schweisshülse 5.1' kreuzweise gewickelt werden oder er wird aus harzgetränkte Matten oder Geweben hergestellt. Auf diese Weise kann durch lagenweises Auftragen der Abschlussmittelkörper gebildet werden. Durch Aushärten des Harzes wird diese Anformung von Halbzeug-Schweisshülse 5.1' und Halbzeug-Abschlussmittel 5.2' mechanisch stabilisiert. Für eine einfache Montage bietet es sich an, das Halbzeug-Abschlussmittel 5.2' mit einer ähnlichen Geometrie wie die Halbzeug-Schweisshülse 5.1' zu versehen, sodass auch sie als geschlossen ringförmige Hülle gearbeitet ist.

In **Figur 3c** ist zu sehen, wie der Halbzeug-Muffenkörper mit massgenau gearbeiteter Muffenbohrung und radial gebohrten Positionsstellen für die Montage von Komponenten zur späteren Kontaktierung der Heizdrahtwicklung versehen wird. Wie beispielsweise in der Schweizerischen Patentanmeldung 01 275/93-6 vom 27. April 1993 im Detail beschrieben ist, können in der Innenfläche der Halbzeug-Schweisshülse 5.1' gemäss Figur 3b Rillen angebracht werden, die zur Aufnahme der Heizdrahtwicklung 2 dienen. Diese Rillen sind in Figur 3c nicht abgebildet. In Teilen der Verankerungsstellen werden Öffnungen 9, 9' angebracht, die zur Aufnahme der Kontakte 3, 3' dienen. Die Öffnungen 9, 9' weisen Absätze auf, welche eine bessere Positionierung der Kontakte 3, 3' ermöglicht. Schliesslich werden auf den Innenkanten 4, 4' der Halbzeug-Schweisshülse 5.1' Facetten gedreht, wodurch ein Aufstecken der Elektro-Schweissmuffe auf solche rohrförmige Schweissenden erleichert wird.

In **Figur 3d** ist die auf der Innenfläche der Halbzeug-Schweisshülse 5.1' gemäss Figur 3c eingelegte Heizdrahtwicklung 2 zu sehen. Nach Einlegen der Heizdrahtwicklung 2 ist die Halbzeug-Schweisshülse 5.1' fertiggestellt und wird dann Schweisshülse 5.1 genannt. Der Einlegevorgang der Heizdrahtwicklung 2 kann mit geeigneten Werkzeugen vollautomatisch geschehen. In der Ausführungsform gemäss Figur 3d verläuft die Heizdrahtwicklung 2 in Bereichen äquidistant, beispielsweise spiralförmig oder in einer Helix auf der Innenfläche der Schweisshülse 5.1. Die Heizdrahtwicklung 2 ist also in zwei Bereiche von spiralförmigen oder helikoidalen, äquidistant verlaufenden Wicklungen strukturiert. Diese aktiv beheizbaren Bereiche der Schweisshülse 5.1 bilden die Schweisszonen 8.2, 8.2' für das Verschweissen rohrförmiger Schweissenden. Die Schweisszonen 8.2, 8.2' sind vom Zentralbereich der zu verbindenden rohrförmigen Schweissenden getrennt und umgeben diesen symmetrisch. Sie liegen deshalb nicht im Zentralbereich, da sich die zu verschweissenden Rohrteile hier nicht notwendigerweise berühren, sondern oft, montagebedingt, ein kleiner Spalt zwischen ihnen bestehen bleiben kann. Der Heizdrahtwicklung 2 kann nach Montage der Kontakte 3, 3' in die Öffnungen 9, 9' elektrischer Strom zum Verschweissen zugeführt werden und das Halbzeug-Abschlussmittel 5.2' wird dann als Abschlussmittel 5.2 bezeichnet.

**Figur 4** zeigt eine zweite Ausführungsform einer erfindungsgemässen Elektro-Schweissmuffe mit einem Abschlussmittel in Form eines metallischen oder duroplastischen Käfigs in einem Längsschnitt durch einen Teil der ElektroSchweissmuffe. Verglichen mit der ersten Ausführungsform gemäss den Figuren 2 und 3d, weist diese zweite Ausführungsform ein Abschlussmittel 5.2 auf, welches die Aussen- und Seitenflächen der Schweisshülse 5.1 durch äussere Begrenzungen 10, 10' umschliesst. Beim Verschweissen rohrförmiger Schweissenden ist die Schweisshülse 5.1 somit auf den Aussen- und Seitenflächen vom Abschlussmittel 5.2 umschlossen, auf den Innenflächen hingegen von den zu verschweissenden rohrförmigen Schweissenden R1, R2.

Diese Begrenzungen 10, 10' der Schweisshülse 5.1 können beispielsweise durch Umbördeln der Endpartien einer dünnwandigen metallischen Hülse, wie jene Endpartien des Abschlussmittelkörpers der ersten Verfahrensvariante gemäss den Figuren 3a bis 3d, hergestellt werden. Es kann aber auch eine andere zweite Verfahrensvariante gewählt werden, in der zuerst ein Halbzeug-Abschlussmittel 5.2' hergestellt wird, beispielsweise durch mechanische Bearbeitung eines Rohrabschnitts aus Metall oder faserverstärkten Duroplasten, wobei auf der Innenseite des Halbzeug-Abschlussmittels 5.2' Auswölbungen 7,7' und äussere Begrenzungen 10,10' angebracht werden. Die Halbzeug-Schweisshülse 5.1' wird daraufhin durch Anspritzen thermoplastischen Kunststoffs im Spritzgussverfahren quasi in das Halbzeug-Abschlussmittel 5.2' "eingefüllt" und somit angeformt, sodass das Halbzeug-Abschlussmittel 5.2' und die Halbzeug-Schweisshülse 5.1' über Verankerungsstellen in Form von Aushöhlungen 6,6' und Auswölbungen 7,7' radial- und axialschlüssig miteinander verbunden sind. Ansonsten ist diese zweite Ausführungsform einer ElektroSchweissmuffe 5 und deren Herstellungsverfahren mit der ersten Ausführungsform der Beschreibung gemäss Figuren 3a bis 3d identisch.

Ein weitere Ausführungsform einer erfindungsgemässen Elektro-Schweissmuffe mit einem aufsetzbaren Abschlussmittel 5.2 in Form von zwei ringförmigen Elementen oder Teilen kann schon radial gepanzerte Muffen nachrüsten, um die erfindungsgemässe Aufgabe zu lösen.

Gemäss dieser Ausführungsform wird, im Unterschied zu den beiden diskutierten Ausführungsformen gemäss den Figuren 2 und 3d, die Schweisshülse 5.1 aus einem oder mehreren Elementen gebildet, die beispielsweise jeweils Schweisszonen 8.2, 8.2' bilden und jeweils die auf die zu verbindenden rohrförmigen Schweissenden R1, R2 gesteckt werden und welche, über ein Zug ausübendes Abschlussmittel 5.2, auf ihren Aussenseiten mittels Verankerungsstellen derart miteinander verbunden werden, dass radial- und axialschlüssige Kräfte resultieren. Eine schon radial gepanzerte Muffe und zwei Abschlussringe bzw. Elemente oder Teile bilden eine Einheit. Je ein Abschlussring wird auf ein Rohrende aufgesteckt und die Rohrenden in die gepanzerte Muffe gesteckt. Die Abschlussringe weisen bspw. am Umfang zapfenförmige Verankerungsstellen auf, über die ein Zugmittel geführt werden kann. Wird bspw. ein Zugdraht an einer Verankerungsstelle eines Abschlussmittels befestigt und wechselweise über die Verankerungsstellen beider Abschlussringe geführt und unter Zug wieder an einer Verankerungsstelle fixiert, so entsteht zwischen den beiden Abschlussmitteln eine achsiale Kraft, welche sich beim Schweissen mit den radialen Kräften der Panzerung kombiniert. Die gleiche Wirkung erzielt man mit einer Art Bajonett-Verschluss zwischen Muffenpanzer und Abschlussring, welche Elemente ebenfalls nachrüstbar sind, bspw. Haltenocken auf der Muffenpanzerung und Zugschlitze an den Abschlussringen.

**Figur 5** zeigt eine dritte Ausführungsform einer erfindungsgemässen Elektro-Schweissmuffe mit einem Abschlussmittel in Form eines metallischen oder duroplastischen Käfigs in einem Längsschnitt durch einen Teil der ElektroSchweissmuffe. Diese Ausführungsform weist ein Abschlussmittel 5.2 auf, welches die Aussen- und Seitenflächen der Schweisshülse 5.1 durch äussere Begrenzungen 10, 10' umschliesst, wobei die Auswölbungen 7, 7' die Form von Haltenocken besitzen. Diese dritte Ausführungsform ähnelt somit den vorhergehenden Ausführungsformen gemäss den Figuren 2, 3d und 4 und folgt deren Beschreibungen. Es handelt sich um eine Kombination der Ausführungsformen gemäss den Figuren 3d und 4. Es liegt also eine radial gepanzerte Muffe mit Auswölbungen 7,7' in den äusseren Begrenzungen 10,10' vor. Da diese Auswölbungen 7,7' in den äusseren Begrenzungen 10,10' angebracht sind, verlaufen sie schräg zur axialen Ausdehnung der Schweissmuffe. Die Verankerungsstellen sind somit als Auswölbungen 7,7' in einem oder mehreren, die Schweisshülse 5.1 übergreifende Abschlussmittel 5.2 gestaltet.

Alle diese verschiedenen Ausführungsformen der Erfindung lassen sich kombinieren. So kann beispielsweise eine aus einem oder mehreren Elementen bestehende Schweisshülse 5.1 über Auswölbungen 7, 7' und Aushöhlungen 6,6' auf der einen Seite vorfixiert sein und auf der Gegenseite einen Abschlussring mit Bajonettverschluss aufweisen. Eine solche Ausführungsform erlaubt das Einschieben eines Schweissteiles in eine, die radialen Kräfte abfangenden Aussenhülle, die auf einer Seite formschlüssig gefangen wird und vor dem Schweissen mit dem Gegenabschlussring achsialwirkend verankert. Dem Fachmann stehen hierbei bei Kenntnis der Erfindung vielfältige Möglichkeiten der Realisierung offen.

## Patentansprüche

1. Elektro-Schweissmuffe (5) zum Verschweissen rohrförmiger Schweissenden (R1,R2) aus schweissbaren Kunststoffen, mit einer Heizdrahtwicklung (2) mit Kontakten (3,3'), welcher zum Verschweissen elektrischer Strom zuführbar ist, wobei die Elektro-Schweissmuffe (5) eine Schweisshülse (5.1) zur Aufnahme der Heizdrahtwicklung (2) und ein Abschlussmittel (5.2) aufweist, mit je formschlüssigen Verankerungsstellen zur gleichzeitigen radial- und axialschlüssigen Verbindung.

2. Elektro-Schweissmuffe (5) gemäss Anspruch 1, dadurch gekennzeichnet, dass die Verankerungsstellen in Form ineinandergreifender Aushöhlungen (6,6') und Auswölbungen (7,7') und/oder als die Schweisshülse (5.1) übergreifendes Abschlussmittel (5.2) gestaltet sind.

3. Elektro-Schweissmuffe (5) gemäss Anspruch 2, dadurch gekennzeichnet, dass ein Abschlussmittel (5.2) auf der Aussenseite der ElektroSchweissmuffe (5) angebracht ist und dass die Schweisshülse (5.1) auf der Innenseite der Elektro-Schweissmuffe (5) angebracht ist.

4. Elektro-Schweissmuffe (5) gemäss Anspruch 3, dadurch gekennzeichnet, dass das Abschlussmittel (5.2) aus beim Schweissvorgang nicht erweichenden Metallen oder faserverstärkten Duroplasten besteht.

5. Elektro-Schweissmuffe (5) gemäss Anspruch 3, dadurch gekennzeichnet, dass die Schweisshülse (5.1) zur werkstoffeinheitlichen Verschweissung aus schweissbarem thermoplastischem Kunststoff besteht.

6. Elektro-Schweissmuffe (5) gemäss einem der Ansprüche 1 bis 5, dadurch gekennzeichnet, dass die Schweisshülse (5.1) auf zu verbindende Schweissenden (R1,R2) schiebbar ist und dass die Schweisshülse (5.1) auf eine, für eine werkstoffeinheitliche dichte Verschweissung mit Schweissenden (R1,R2), minimale Wanddicke reduziert ist.

7. Elektro-Schweissmuffe (5) gemäss einem der Ansprüche 1 bis 6, dadurch gekennzeichnet, dass die Aushöhlungen (6,6') und die Auswölbungen (7,7') der Verankerungsstellen passend zueinander gearbeitet sind und dass sie auf den äusseren Oberflächen der Schweisshülse (5.1) und auf den inneren Oberflächen des Abschlussmittels (5.2) angebracht sind.

8. Elektro-Schweissmuffe (5) gemäss einem der Ansprüche 1 bis 7, dadurch gekennzeichnet, dass das Abschlussmittel (5.2) Begrenzungen (10,10') aufweist, die eine äussere Erweiterung als radiale oder axiale Expansion des durch die beim Verschweissen erzeugte Wärme elastisch und weich werdenden thermoplastischen Kunststoffs der Schweisshülse (5.1) verhindert.

9. Elektro-Schweissmuffe (5) gemäss einem der Ansprüche 1 bis 8, dadurch gekennzeichnet, dass das Abschlussmittel (5.2) eine axiale Verstärkung liefert, die den Kraftfluss äusserer Kräfte über die Schweissverbindungen zu den rohrförmigen Schweissenden (R1,R2) auf die Elektro-Schweissmuffe (5) auffängt.

10. Elektro-Schweissmuffe gemäss Anspruch 1, dadurch gekennzeichnet, dass das Abschlussmittel (5.2) aus einem die Radialkräfte auffangenden Teil und ein oder zwei die Achsialkräfte auffangenden Teil/en besteht und dass die Radial- und Achsialkraftteile mit Fixiermitteln versehen sind, um die Kraftaufnahme von beiden Kräften gleichzeitig zu realisieren.

11. Elektro-Schweissmuffe gemäss Anspruch 10, dadurch gekennzeichnet, dass die Fixiermittel Zapfen an Abschlussringen und Zugmittel an Zäpfen beider Ringe sind.

12. Elektro-Schweissmuffe gemäss Anspruch 10, dadurch gekennzeichnet, dass die Fixiermittel Bajonettveschlüsse an Abschlussringen und Muffenpanzerung sind.

13. Verfahren zur Herstellung einer Elektro-Schweissmuffe (5) gemäss einem der Ansprüche 1 bis 12, dadurch gekennzeichnet, dass eine Halbzeug-Schweisshülse (5.1') durch mechanische Bearbeitung eines Rohrabschnittes oder als Spritzgussteil hergestellt wird, dass auf der Aussenseite der Halbzeug-Schweisshülse (5.1') Aushöhlungen (6,6') angebracht werden, dass ein Halbzeug-Abschlussmittel (5.2') durch Aufwickeln harzgetränkter Schnüre und Matten angeformt wird, sodass Auswölbungen (7,7') des Halbzeug-Abschlussmittel (5.2') in Aushöhlungen (6,6') der Halbzeug-Schweisshülse (5.1') stecken und somit Verankerungsstellen bilden, dass im Halbzeug-Abschlussmittel (5.2') und der Halbzeug-Schweisshülse (5.1') Öffnungen (9,9') zur Montage von Kontakten (3,3') angebracht werden, dass eine Heizdrahtwicklung (2) auf der Innenfläche der Halbzeug-Schweisshülse (5.1') eingelegt wird, wodurch die Halbzeug-Schweisshülse (5.1') zu einer Schweisshülse (5.1) wird, dass Kontakte (3,3') angebracht werden, wodurch das Halbzeug-Abschlussmittel (5.2') zu einem Abschlussmittel (5.2) wird und dass der Heizdrahtwicklung (2) über die Kontakte (3,3') elektrischer Strom zum Verschweissen zugeführt werden kann.

14. Verfahren zur Herstellung einer Elektro-Schweissmuffe (5) gemäss einem der Ansprüche 1 bis 12, dadurch gekennzeichnet, dass ein Halbzeug-Abschlussmittel (5.2') durch mechanische Bearbeitung eines Rohrabschnittes aus Metall oder aus faserverstärkten Duroplasten hergestellt wird, dass auf der Innenseite des Halbzeug-Abschlussmittel (5.2') Auswölbungen (7,7') und/oder äussere Begrenzungen (10,10') angebracht werden, dass eine Halbzeug-Schweisshülse (5.1') durch Anspritzen von thermoplastischem Kunststoff in das Halbzeug-Abschlussmittel (5.2') angeformt wird, sodass Auswölbungen (7,7') des Halbzeug-Abschlussmittels (5.2') in Aushöhlungen (6,6') der Halbzeug-Schweisshülse (5.1') stecken und somit Verankerungsstellen bilden und sodass die Aussen- und Seitenflächen der Halbzeug-Schweisshülse (5.1') von den äusseren Begrenzungen (10,10') umschlossen werden, dass im Halbzeug-Abschlussmittel (5.2') und der Halbzeug-Schweisshülse (5.1') Öffnungen (9,9') zur Montage der Kontakte (3,3') angebracht werden, dass eine Heizdrahtwicklung (2) auf der Innenfläche der Halbzeug-Schweisshülse (5.1') eingelegt wird, wodurch die Halbzeug-Schweisshülse (5.1') zu einer Schweisshülse (5.1) wird, dass Kontakte (3,3') angebracht werden, wodurch das Halbzeug-Abschlussmittel (5.2') zu einem Abschlussmittel (5.2) wird und dass der Heizdrahtwicklung (2) über die Kontakte (3,3') elektrischer Strom zum Verschweissen zugeführt werden kann.
